Europäisches Patentamt

European Patent Office

Office européen des brevets

(11) Publication number: **0 211 290 B1**

# EUROPEAN PATENT SPECIFICATION

(45) Date of publication of patent specification: **18.12.91**　(51) Int. Cl.⁵: **G21C 13/02**

(21) Application number: **86109789.7**

(22) Date of filing: **16.07.86**

(54) **Permanent seal ring for a nuclear reactor cavity.**

(30) Priority: **25.07.85 US 758907**

(43) Date of publication of application:
**25.02.87 Bulletin 87/09**

(45) Publication of the grant of the patent:
**18.12.91 Bulletin 91/51**

(84) Designated Contracting States:
**BE DE FR GB IT**

(56) References cited:
**DE-A- 1 904 463**
**FR-A- 2 232 042**
**US-A- 4 070 221**
**US-A- 4 170 517**

(73) Proprietor: **WESTINGHOUSE ELECTRIC COR-
PORATION
Westinghouse Building Gateway Center
Pittsburgh Pennsylvania 15222(US)**

(72) Inventor: **Hankinson, Michael Francis
122, Drake Drive
Monroeville Pa. 15146(US)**
Inventor: **Marshall, James Richard
1009 Evergreen Drive
Pittsburgh, Pa. 15235(US)**

(74) Representative: **Casalonga, Axel et al
BUREAU D.A. CASALONGA - JOSSE Moras-
sistrasse 8
W-8000 München 5(DE)**

Rank Xerox (UK) Business Services

## Description

This invention relates to a nuclear reactor installation and more particularly to a permanent seal arrangement for the thermal expansion gap defined between a peripheral wall of a nuclear rector vessel and containment wall.

The refueling of pressurized water reactors is an established operation which is normally carried out with a high degree of reliability. In such reactors, a reactor vessel is positioned in a cavity formed by a concrete containment wall. The containment wall has a lower annular portion or well in which the vessel is seated and an upper annular portion above the vessel which defines a refueling canal. The canal is maintained dry during reactor operations, but is filled with water during the replacement of spent fuel assemblies. During refueling, the reactor vessel is opened, thereby exposing the core, and fuel assemblies are exchanged. The water in the refueling canal acts as shielding to maintain radiation levels within acceptable limits.

The reactor vessel has flanges which join a head assembly to the reactor vessel proper. A lower flange is positioned on the peripheral wall of the reactor vessel near the vessel opening and is sealed to the lower portion of the refueling canal by a seal ring. The seal ring prevents leakage, during the refueling operation, of shielding water into the well in which the vessel is seated. The seal ring is usually preferably water-tight, however, pumps are provided in the well for expelling unwanted fluids, such as water which might penetrate the seal if the sealing engagement thereof is imperfect. However, shielding water leakage has more serious consequences than potential damage to the well or vessel. A sudden loss of shielding water from the refueling canal exposes personnel working in the area to high radiation dosages and contaminates the environment. Such a sudden loss of shielding water does not give personnel sufficient time to make safe the exposed radiation sources and must be prevented.

Prior art seal rings are discussed in U.S. Patent No. 4,170,517 to Meuschke et al Removable gasket-type seal rings, such as elastomeric gaskets, are known and are installed after reactor cooldown and prior to the flooding of the refueling canal. Such elastomeric gaskets are susceptible to thermal degradation and leakage, require significant amounts of time to install, and must be replaced at each refueling operation.

Permanent seal rings are also known and have the advantage of reducing the time required for the refueling operation. The Meuschke et al patent discloses a permanent, water-tight, flexible seal having a quarter-circular cross-section, made of, for example, stainless steel, and being constructed to cyclicly contract and expand, respectively, with cyclic expansion and contraction of the reactor vessel relative to the containment wall during reactor operation, while maintaining the water-tight integrity of the seal. Such a seal is inherently flexible across its entire expanse, however, and the strength of the member is limited by this flexibility requirement. Thus, such seals are susceptible to damage from falling objects, such as accidentally dropped fuel assemblies. Such accidents can involve a sudden and nearly complete loss of shielding water from the refueling canal, thereby endangering personnel and contaminating the environment.

French Patent No. 2232042 provides for parallel flexible seal structures for improved safety. However there is a possibility that both structures fail or that failure of one is not noticed until the second structure fails and it is too late to prevent an accident.

Accordingly, it is the principal object of the present invention to provide a reactor installation with a reactor cavity seal ring arrangement, whose sealing integrity is substantially maintained but which is structurally flexible enough to accommodate the radial and axial thermal expansion/contraction of the reactor vessel relative to the containment wall experienced during reactor operation and which prevents complete or sudden loss of shield water even if the flexible seal structure fails while the reactor cavity is flooded for refueling.

With this object in view the present invention resides in a nuclear reactor vessel, having a containment wall, spaced apart from, and surrounding, the reactor vessel, and an annular ring seal spanning the gap between said reactor vessel and said containment wall, said seal including a ring plate having an outer peripheral surface which sealingly engages, and is affixed to, the containment wall and an inner peripheral surface which is proximate the reactor vessel, a flexure member having L-shaped cross-section with an annular base plate, sealingly affixed to the ring plate near the inner peripheral surface thereof, and a leg extending upwardly from the annular base plate and being affixed to an annular ledge formed on the peripheral wall of the reactor vessel to thereby seal the annular thermal expansion gap, characterized in that a backup member including an annular backup plate is disposed adjacent the flexure member and has a first perimeter joined to the inner peripheral surface from which the backup plate extends upwardly and a second perimeter extending toward the bottom surface of said ledge in close proximity therewith to thereby provide a backup structure for the flexure member to preclude the possibility of major leakage in the event of a structural failure of the flexure member.

The backup member including a backup plate which is surrounded by the flexure member precludes the possibility of major leakage in the event of a structural failure of the flexure member.

The invention will become readily apparent from the following description of a preferred embodiment thereof shown, by way of example only, in the accompanying drawings in which:

Figure 1 is an elevational view partly in cross-section of a reactor containment incorporating a preferred annular ring seal according to this invention;

Figure 2 is an enlarged cross-sectional view of a portion of a preferred annular ring seal according to the invention; and

Figure 3 is a cross-sectional plan view of the reactor containment incorporating the annular ring seal of Figure 2 as viewed through section line A-A.

This invention provides new annular ring seals for establishing a permanent seal across the annular thermal expansion gap between the peripheral wall of a nuclear reactor vessel and a containment wall. The new seals may be installed in place of existing prior art seals of either the removable or permanent types. Although their installation may be considered permanent, they can be removed and repaired or replaced if the need arises. The seals according to the present invention are constructed to cyclicly contract and expand, respectively, with cyclic expansion and contraction of the reactor vessel relative to the containment wall during reactor operation, while maintaining the integrity of the seal, most preferably while maintaining the watertight integrity of the seal. The seals include a flexure member which provides the required flexibility. The seals are structured so that the flexure member is protected from falling objects by virtue of its positioning. Further, the seals include an annular ring plate member which is strong enough to accommodate the force of even the heaviest object which might be accidentally dropped on the plate member during the reactor refueling operation, without complete or sudden loss of shielding water.

Thus, the flexure member of each annular ring seal has an annular base plate which sealingly engages and is affixed to the annular ring plate of the seal near an inner surface thereof proximate the reactor vessel wall, and a leg which extends from the annular base plate, is affixed to the reactor vessel, and sealingly engages the reactor vessel. The flexure member most preferably has an L-shaped cross-section in which case the leg is a cylindrical leg which extends perpendicularly from the annular base plate. The perpendicular, i.e., vertical, extension of such a cylindrical leg from the annular base plate is a structural feature which minimizes the possibilitiy of damage thereto from falling objects by minimizing the exposed horizontal cross-sectional area of the flexure member. However, protection of the flexure member may be accomplished by providing a leg which makes an acute angle with the annular base plate, or, alternately, by a leg which makes an obtuse angle with the annular base plate, so long as the leg is protected from vertically dropped obejcts by being nested under the reactor vessel flange or an annular ledge. Thus, the flexure member may have a conical cross-section or a cross-section of any other configuration.

This protected flexure member feature significantly contributes to satisfying the need for assurance that a sudden or complete loss of shielding water from the refueling canal will not occur by virtue of a structural failure of the ring seal. The protected flexure member need not be strong enough to directly withstand the impact of a dropped object, but may be manufactured from sheet metal, such as stainless or carbon steel, and must be thin enough to provide the flexibility required to accommodate the cyclic thermal expansion and contraction required of the seal during reactor operations, while having at least the strength to withstand the weight of the shielding water introduced during the reactor refueling operation.

These new ring seals may advantageously be provided with a backup member to provide a backup structure for the flexure member to preclude the possibility of a major leakage in the event of a structural failure of the flexure member, however improbable. The backup member serves to restrict the flow of water in the event of a structural failure of the flexure member, thereby providing the refueling crew with time to make safe the exposed reactor core or any exposed fuel assemblies, by redundantly assuring the prevention of the catastrophically sudden and/or complete loss of shielding water from the refueling canal.

The backup member includes a backup plate which is positioned inboard of the flexure member, i.e., in closer proximity to the reactor vessel, and which extends from the annular ring plate toward the reactor vessel. The backup plate is most preferably a cylindrical plate extending vertically in cross-section, however, the backup plate may have a conical cross-section of virtually any slope, or a cross-section of any other configuration. The backup plate preferably does not contact the reactor vessel, since the backup member is not intended to sealingly engage the reactor vessel. Sealing engagement of the backup member to the vessel would reduce the flexibility of the structural arrangement          needed          for          thermal expansion/contraction and, in any event, would be difficult to achieve in a permanent ring seal because of the non-accessibility of the juncture of the backup member with the vessel during installation.

The backup member may further include a flashing which biasingly engages the reactor vessel, but which does not sealingly engage the vessel. The term "flashing" as used herein is meant to include a member having any cross-section, such as a conical, hemispherical or spherical cross-section as provided by, for example, a conical ring, a half-moon ring, or an O-ring, respectively.

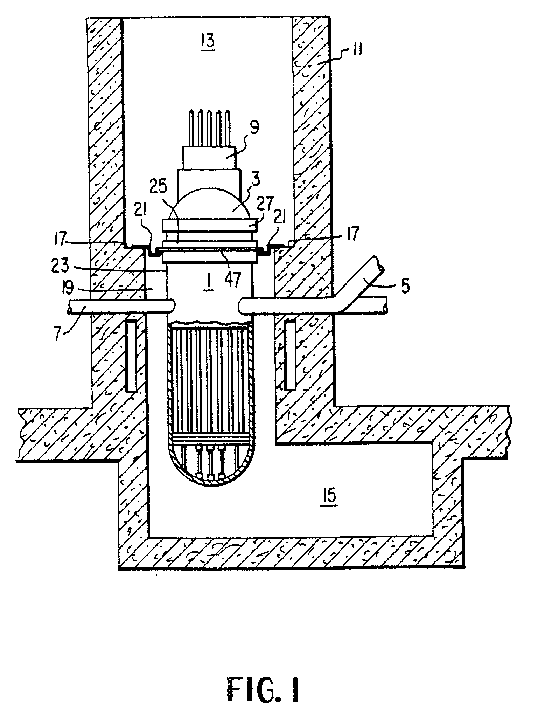

The invention can be better understood by reference to Figure 1, an elevational view partly in cross-section of a nuclear reactor containment arrangement showing the pertinent part of a nuclear steam generating system of the pressurized water type incorporating a permanent ring seal according to this invention. A nuclear reactor vessel 1 is shown which forms a pressurized container when sealed by its head assembly 3. The reactor vessel 1 has coolant flow inlet means 5 and coolant flow outlet means 7 formed integral with and through its cylindrical wall. The reactor vessel 1 contains a nuclear core (not shown) consisting mainly of a plurality of clad nuclear fuel elements which generate substantial amounts of heat depending primarily upon the position of control means, pressure vessel housing 9 of which is shown. The heat generated by the reactor core is conveyed from the core by coolant flow entering through inlet means 5 and exiting through outlet means 7, as is well established in the art.

The reactor vessel 1 and head assembly 3 are maintained within a reactor cavity defined by a concrete containment wall 11. The reactor cavity is divided into an upper portion which defines and is commonly utilized as a refueling canal 13 and a lower portion which is a well 15 completely surrounding the vessel structure itself. A shelf 17 is provided in the containment wall 11 and divides the upper portion of the reactor cavity from the lower portion.

An open annulus defined between the containment wall 11 and the reactor vessel 1 is an annular thermal expansion gap 19 and is provided with an annular ring seal 21 at least during refueling operations, but preferably is positioned permanently. The ring seal 21 accommodates the normal thermal expansions and contractions of material experienced during reactor operation, while maintaining the integrity of the seal essential during refueling operations in which the upper portion of the reactor cavity defining refueling canal 13 is filled with water in order to provide a radiation shield for the exposed core and refueling assemblies. Preferably, the annular ring seal 21 is a permanent seal which sealingly engages and is affixed to the containment wall 11 (or fixture thereof), preferably along the shelf 17, and to a peripheral wall 23 (or fixture thereof) of the reactor vessel 1, preferably to a lower flange 25 (or fixture thereof) positioned along the peripheral wall 23 near the reactor vessel opening (not shown), the opening being exposed when the head assembly 3, which includes an upper flange 27, is removed during the refueling operation.

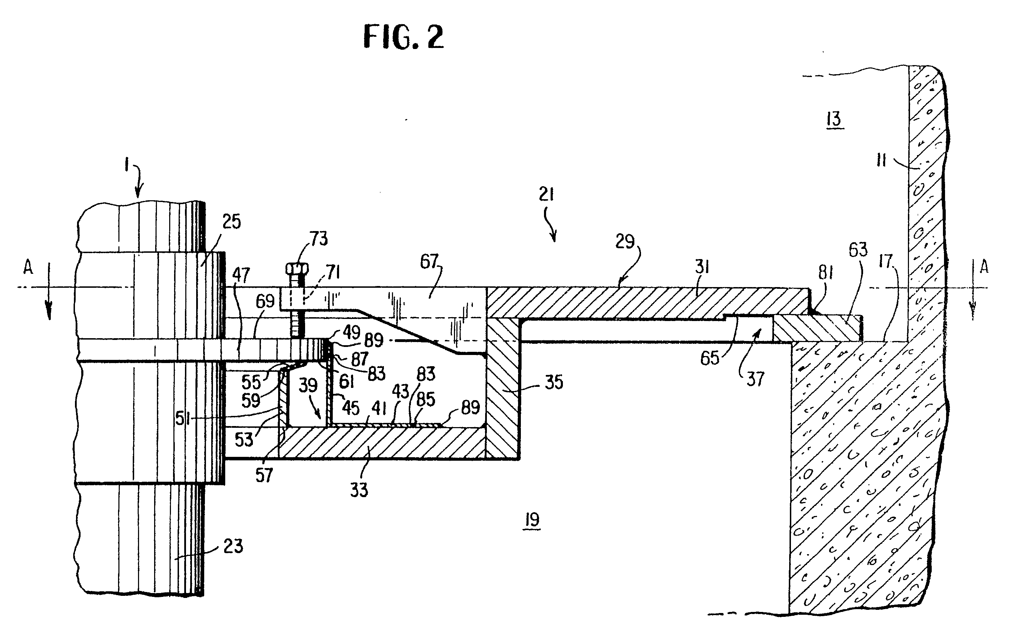

The preferred annular ring seal 21 of this invention can be better appreciated by reference to Figure 2 which shows, in cross-section, a portion of a ring seal 21 and its interface with the lower flange 25 and the shelf 17 of the containment wall 11. In this preferred embodiment, the annular ring seal 21 comprises an annular ring plate (shown generally at 29). The annular ring plate 29 has a step-shaped cross-section and has a first annular portion 31, a second annular portion 33, and a cylindrical portion 35 which interconnects the first and second annular portions 31, 33, respectively, to form the step-shaped cross-section. The cross-section may alternately have any configuration. The first annular portion 31 surrounds the second annular portion 33 and includes an outer peripheral surface (shown generally at 37) for the annular ring plate 29. The second annular portion 33 includes an inner peripheral surface (shown generally at 39) for the annular ring plate 29.

With continuing reference to Figure 2, the annular ring seal 21 further comprises a flexure member 41 shown as having an L-shaped cross-section. The flexure member 41 has an annular base plate 43, which sealingly engages and is affixed to the annular ring plate 29 near the inner peripheral surface 39 thereof, the inner peripheral surface 39 of this embodiment being provided in the second annular portion 33. The flexure member 41 also has a leg 45, which is joined to and extends upwardly from the annular base plate 43 and which sealingly engages and is affixed to an annular ledge 47 provided along the lower flange 25 for engaging the ring seal 21. Leg 45 is shown as a cylindrical leg extending perpendicularly upwardly from the annular base plate and forming an L-shaped cross-section therewith. As discussed previously, however, the leg may make an acute angle or an obtuse angle with the annular base plate and still provide a structure in which the flexure member is protected from falling objects by virtue of its positioning. Thus, for example, when the leg and annular base plate make an angle other than a right angle with one another, the leg should lie beneath and be protected by, for example, the annular ledge. Further, the extremity of the leg which engages the peripheral wall or a fixture therof, such as the flange or annular ledge, should be adapted as necessary. The annular ledge 47 has a first surface 49 which overlappingly and sealingly engages the leg 45 of the flexure member 41.

Figure 2 shows a most preferred embodiment of the present invention in which the annular ring seal 21 also comprises a backup member 51 including backup plate 53 and a flashing 55. The backup plate 53 is shown as a cylindrical plate and is surrounded by the flexure member 41 and has a first perimeter 57 and a second perimeter 59. The first perimeter 57 is joined to the inner peripheral surface 39 from which the backup plate 53 extends upwardly. The flashing 55 extends from the second perimeter 59 and is biased to engage a second surface 61 of the annular ledge 47. In embodiments without a flashing 55, the second perimeter 59 of the backup plate 53 may extend toward the underside second surface 61 of the annular ledge 47, without directly engaging the same, but rather defining a gap therewith sufficient to allow for thermal expansion and contraction.

The backup member 51 provides a backup structure for the flexure member 41 to preclude the possibility of major leakage of shielding water (not shown) in the event of a structural failure of the flexure member 41. The backup member 51 does not form a water-tight seal with the annular ledge 47, but rather functions as a flow restrictor to prevent a catastrophically sudden and/or complete loss of shielding water from the refuelling canal 13 during the refueling operation, in the event of a structural failure from, for example, the accidental dropping of a fuel assembly onto the annular ring seal 21. By restricting the flow, the refueling crew is given the necessary time to make safe any exposed radiation sources, thereby further assuring the safety of the crew and preventing contamination of the environment.

Figure 2 also shows the shelf 17 of the containment wall 11 fitted with a mating plate 63 which has a rectangular cross-section. The mating plate 63 may be, for example, imbedded into or bolted onto the shelf 17 through apertures (not shown) provided in the respective parts and preferably sealingly engages the shelf 17. A lip or recess 65 is shown defined along the outer peripheral surface 37 of the first annular portion 31 of annular ring place 29. The thickness of the first annular portion 31 in the area of the recess 65 is less than the thickness of the remainder thereof to permit plastic deformation of the first annular portion 31 and to facilitate overlapping and sealing engagement thereof with the mating plate 63. Recess 65 also facilitates initial positioning of the annular ring seal 21 during installation and prevents gross movement thereof in the event of a weld failure.

Annular ring seal 21 may also comprise a plurality of support arms 67, each support arm 67 extending from the cylindrical portion 35 of the annular ring plate 29 toward the reactor vessel 1. Each arm is adapted to rest on the reactor vessel 1, such as on a third surface 69 of the annular ledge 47, thereby providing auxiliary support for the annular ring seal 21. Each support arm 67 is preferably provided with alignment means, shown in Figure 2 as a threaded aperture 71 defined in each support arm 67 along the portion thereof which overlaps the annular ledge 47 and a leveling bolt 73 threadingly inserted through the threaded aperture 71. Each bolt 73 engages the annular ledge 47 for initially aligning the annular ring seal 21 during installation and for providing auxiliary support for the annular ring seal 21 during the refueling operation. Bolts 73 may optionally be removed during reactor operation. Support arms 67 may be welded onto the annular ring plate 29 and may be conveniently used to support open grating plates (not shown) for personnel to stand on during the refueling operation, which open grating plates rest upon and span the distance between support arms 67. Support arms 67 may be preferably placed at from 20 to 30 degree intervals along the annular ring seal 21.

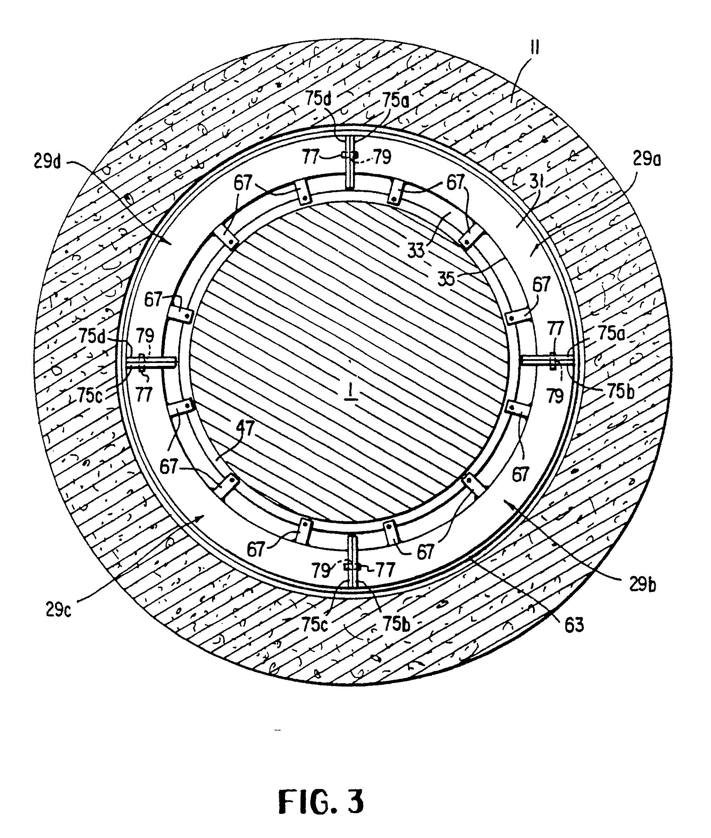

Figure 3 is a cross-sectional plan view of the reactor containment incorporating the annular ring seal 21 of Figure 2 through section line A-A. Reactor vessel 1 is shown schematically. The annular ring plate 29 of the annular ring seal 21 is more clearly shown as being comprised of a plurality of arc sections 29a, 29b, 29c, 29d. The four arc sections 29a, 29b, 29c, 29d shown have equal arc lengths. Other embodiments are contemplated which have any number of arc sections, such as three arc sections, and the arc lengths thereof need not be equal.

Each arc section may have a pair of flanges 75, shown in Figure 3 as flange pairs 75a, 75b, 75c, 75d, respectively, for interconnection thereof with adjacent arc sections using flange connection means. Alternate connection means are contemplated however and should be considered to be within the scope of the present invention. The flange connection means shown in Figure 3 comprises a plurality of dowel pins 77 and a plurality of apertures 79 provided in each flange 75. The apertures 79 of each of a pair of flanges from adjacent arc sections, for example, flanges 75a and 75b from adjacent arc sections 29a and 29b, are aligned respectively and are adapted to receive one dowel pin 77. Adjacent arc sections may further be provided with a sealing weld (not shown).

By way of example, when the flexure member 41 is designed to withstand up to 12.1 psig of water pressure, and the annular ring plate 29 is designed to withstand the impact of a fuel assembly weighing on the order of 700 kg, the annular ring plate 29 is constructed of 2.54 centimeter thick stainless or carbon steel and the seams joining portions 31, 35 and 33 are welded together. The flexure member 41 is likewise constructed of stainless or carbon steel and has a thickness ranging from 1.6 millimeters to 3.2 millimeters. The backup plate 53 of the backup member 51 is likewise constructed of stainless or carbon steel and has a thickness on the order of 1.27 centimeters. The flashing 55 is biased against the annular ledge 47 and is constructed of stainless steel of approximately 0.3 to 0.4 millimeter. The flashing 55 may alternately be constructed of an elastomer such as rubber and have a thickness of from about 0.8 to 1.6 millimeters.

It is preferable that the various metal portions be all welded together so that the ring seal 21 is gasket free. Further, surface non-uniformities in mating plate 63 are compensated for during installation by using a weld prep 81, shown in Figure 2, so that the weld prep is compressed on installation by means of a roller or a weld plate. The annular base plate 43 of the flexure member 41 may be affixed to the inner peripheral surface 39 of the second annular portion 33 of the annular ring plate 29 by field welding and, optionally and/or additionally, plug welds 83 may be provided through intermittent apertures 85 provided in annular base plate 43 and spaced apart by from 15 to 30 centimeters. Likewise, the leg 45 of the flexure member 41 may be welded to the first surface 49 of the annular ledge 47 and plug welds 83 may be provided through intermittent apertures 87 provided in the leg 45 and spaced apart by from 15 to 30 centimeters. Fillet welds 89 may also be advantageously used, as shown in Figure 2, at the ends of annular base plate 43 and leg 45, such weld types being well known in the art.

## Claims

1. A nuclear reactor vessel (1), having a containment wall (11), spaced apart from, and surrounding, the reactor vessel (1), and an annular ring seal (21) spanning the gap (19) between said reactor vessel and said containment wall, said seal (21) including a ring plate (29) having an outer peripheral surface (37) which sealingly engages, and is affixed to, the containment wall (11) and an inner peripheral surface (39) which is proximate the reactor vessel (1), a flexure member (41) having L-shaped cross-section with an annular base plate (43), sealingly affixed to the ring plate (29) near the inner peripheral surface (39) thereof, and a leg (45) extending upwardly from the annular base plate (43) and being affixed to an annular ledge (47) formed on the peripheral wall (23) of the reactor vessel (1) to thereby seal the annular thermal expansion gap, characterized in that a backup member (51) including an annular backup plate (53) is disposed adjacent the flexure member (41) and has a first perimeter (57) joined to the inner peripheral surface (39) from which the backup plate (53) extends upwardly and a second perimeter (59) extending toward the bottom surface (61) of said ledge (47) in close proximity therewith to thereby provide a backup structure for the flexure member (41) to preclude the possibility of major leakage in the event of a structural failure of the flexure member (41).

2. A nuclear reactor installation according to claim 1, characterized in that the annular ring plate (29) has a step-shaped cross-section and has a first annular portion (31), a second annular portion (33), and a cylindrical portion (35) which interconnects the first and second annular portion (31, 33) to form the step-shaped cross-section, the first annular portion (31) surrounding the second annular portion (33) and including the outer peripheral surface (37) which sealingly engages and is affixed to the containment wall (13), the second annular portion (33) including the inner peripheral surface (39) which is proximate the reactor vessel (1); and that the annular base plate (43) of the flexure member (41) sealingly engages and is affixed to the second annular portion (33) of the annular ring plate.

3. A nuclear reactor installation according to claim 1 or 2, characterized in that the backup member (51) further comprises a flashing (55) which extends from the second perimeter (59) and is biased to engage the peripheral wall (23) of the reactor vessel (1).

4. A nuclear reactor installation according to any of claims 1 to 3, characterized in that a plurality of support arms (67) extend from the cylindrical portion (35) of the annular ring seal (21) toward the reactor vessel (1) and so as to rest on the reactor vessel (1) to thereby provide auxiliary support for the annular ring seal (21) and that each support arm (67) overlappingly engages the annular ledge (47) of the reactor vessel (1) and is provided with alignment means (73).

5. A nuclear reactor installation according to any of claims 1 to 4, characterized in that the annular ring plate (29) of the annular ring seal (21) comprises a plurality of arc sections (75) each arc section (29) having a pair of flanges (75) for interconnection thereof with adjacent arc sections (29) by flange connection means (77).

6. A nuclear reactor installation according to any of claims 1 to 5, characterized in that a recess (65) is defined along the outer peripheral surface (37) of the first annular portion (31) of the annular ring plate (29) such that the thickness thereof in the area of the recess (65) is less than the thickness of the remainder thereof to permit plastic deformation of the first annular portion (31) and facilitate overlapping and sealing engagement thereof with a mating plate (63) provided on a shelf (17) of the containment wall (11).

**Revendications**

1. Cuve (1) de réacteur nucléaire, comportant une paroi de confinement (11), espacée de la cuve (1) de réacteur et entourant cette cuve, et un joint d'étanchéité annulaire (21) comblant l'intervalle (19) entre ladite cuve de réacteur et ladite paroi de confinement, ledit joint d'étanchéité (21) comprenant une plaque annulaire (29) comportant une surface périphérique extérieure (37) qui porte de façon étanche, en y étant fixée, contre la paroi de confinement (11) et une surface périphérique intérieure (39) qui se trouve à proximité de la cuve (1) de réacteur, un élément de flexion (41) ayant une section droite en forme de L et comportant une plaque de base annulaire (43), fixée de façon étanche à la plaque (29) de joint annulaire près de la surface périphérique intérieure (39) de cette dernière et une aile (45) s'étendant vers le haut depuis la plaque de base annulaire (43) et étant fixée à un collet annulaire (47) formé sur la paroi périphérique (23) de la cuve (1) de réacteur, de manière à fermer ainsi de façon étanche l'intervalle de dilatation thermique annulaire, **caractérisée** en ce qu'un élément d'appui (51) comprenant une plaque d'appui annulaire (53) est disposé de façon adjacente à l'élément de flexion (41) et présente un premier périmètre (57) réuni à la surface périphérique intérieure (39) à partir de laquelle la plaque d'appui (53) s'étend vers le haut et un second périmètre (59) s'étendant vers la surface inférieure (61) dudit collet (47) au voisinage immédiat de ce dernier, de manière à constituer une structure d'appui pour l'élément de flexion (41) afin d'empêcher la possibilité d'une fuite importante dans le cas d'une défaillance structurale de l'élément de flexion (41).

2. Installation de réacteur nucléaire selon la revendication 1, **caractérisée** en ce que la plaque annulaire (29) de joint a une section droite en forme de gradins et comporte une première partie annulaire (31), une seconde partie annulaire (33) et une partie cylindrique (35) qui relie entre elles les première et seconde parties annulaires (31, 33) de manière à former la section droite en forme de gradins, la première partie annulaire (31) entourant la seconde partie annulaire (33) et comprenant la surface périphérique extérieure (37) qui porte de façon étanche, en y étant fixée, contre la paroi de confinement (13), la seconde partie annulaire (33) comprenant la surface périphérique intérieure (39) qui se trouve à proximité de la cuve (1) de réacteur ; et en ce que la plaque de base annulaire (43) de l'élément de flexion (41) porte de façon étanche, en y étant fixée, contre la seconde partie annulaire (33) de la plaque de joint annulaire.

3. Installation de réacteur nucléaire selon la revendication 1 ou 2, **caractérisée** en ce que l'élément d'appui (51) comprend, en outre, un élément de colmatage ou d'obstruction (55) qui s'étend depuis le second périmètre (59) et qui est sollicité de manière à porter contre la paroi périphérique (23) de la cuve (1) de réacteur.

4. Installation de réacteur nucléaire selon l'une quelconque des revendications 1 à 3, **caractérisée** en ce qu'une multiplicité de bras de support (67) s'étendent depuis la partie cylindrique (35) du joint d'étanchéité annulaire (21) en direction de la cuve (1) de réacteur de manière à reposer sur cette cuve (1) de réacteur afin de constituer ainsi un support auxiliaire pour le joint d'étanchéité annulaire (21) et en ce que chaque bras de support (67) porte de façon recouvrante contre le collet annulaire (47) de la cuve (1) de réacteur et est pourvu de moyens d'alignement (73).

5. Installation de réacteur nucléaire selon l'une quelconque des revendications 1 4, **caractérisée** en ce que (21) la plaque annulaire (29) du joint d'étanchéité annulaire (21) comprend une multiplicité de sections d'arc (75), chaque section d'arc (29) comportant une paire de rebords (75) pour leur interconnexion avec les sections d'arc adjacentes (29) à l'aide de moyens (77) de connexion de rebords.

6. Installation de réacteur nucléaire selon l'une quelconque des revendications 1 à 5, **caractérisée** en ce qu'une feuillure (65) est formée le long de la surface périphérique extérieure (37) de la première partie annulaire (31) de la plaque annulaire (29) de joint, de telle sorte que l'épaisseur de cette dernière dans la zone de la feuillure (65) soit inférieure à l'épaisseur du restant de cette plaque pour permettre une déformation plastique de la première partie annulaire (31) et pour faciliter le contact recouvrant et étanche de cette première partie avec une plaque de raccordement (63) présente sur un épaulement (17) de la paroi de confinement (11).

**Patentansprüche**

1. Kernreaktorgefäß (1) mit einer im Abstand von diesem befindlichen und dieses umgebenden Behälterwand (11) und einer ringförmigen Ringdichtung (21), die den Zwischenraum (19) zwischen dem Reaktorgefäß und der Behälterwand überbrückt, wobei die Dichtung (21) eine Ringplatte (29), die eine äußere Umfangsfläche (37), welche abdichtend an der Behälterwand (11) eingreift und an dieser befestigt ist, und eine innere Umfangsfläche (39) aufweist, die sich nahe zum Reaktorgefäß (1) befindet, ein biegsames Glied (41) von L-förmigem Querschnitt mit einer ringförmigen Grundplatte (43), das abdichtend an der Ringplatte (29) nahe an deren innerer Umfangsfläche (39) befestigt ist, und einen Schenkel (45) umfaßt, der sich von der ringförmigen Grundplatte (43) nach oben erstreckt und zum Abdichten des ringförmigen, für die thermische Ausdehnung vorgesehenen Zwischenraumes an einem ringförmigen Vorsprung (47) befestigt ist, der an der Umfangswand (23) des Reaktorgefäßes (1) ausgebildet ist, dadurch gekennzeichnet, daß ein Stützglied (51) einschließlich einer ringförmigen Stützplatte (53) neben dem biegsamen Glied (41) angeordnet ist und einen ersten Umfang (57), der mit der inneren Umfangsfläche (39) verbunden ist, von der sich die Stützplatte (53) nach oben erstreckt, und einen zweiten Umfang (59) aufweist, der sich zur unteren Fläche (61) des Vorsprungs (47) in und nahe zu dieser erstreckt, so daß auf diese Weise zum Ausschließen der Möglichkeit eines größeren Lecks im Falle eines strukturellen Versagens des biegsamen Glieds (41) ein Stützaufbau für das biegsame Glied (41) vorgesehen ist.

2. Kernreaktoranlage nach Anspruch 1, dadurch gekennzeichnet, daß die ringförmige Ringplatte (29) einen stufenförmigen Querschnitt hat und einen ersten ringförmigen Teil (31), einen zweiten ringförmigen Teil (33) und einen zylinderförmigen Teil (35) aufweist, welcher zur Bildung des stufenförmigen Querschnitts den ersten und den zweiten ringförmigen Teil (31, 33) verbindet, wobei der erste ringförmigen Teil (31) den zweiten ringförmigen Teil (33) umgibt und die äußere Umfangsfläche (37) umfaßt, die abdichtend an der Behälterwand (13) eingreift und an dieser befestigt ist, und der zweite ringförmige Teil (33) die innere Umfangsfläche (39) umfaßt, welche sich nahe zum Reaktorgefäß (1) befindet; und daß die ringförmige Grundplatte (43) des biegsamen Gliedes (41) abdichtend an dem zweiten ringförmigen Teil (33) der ringförmigen Ringplatte eingreift und an diesem befestigt ist.

3. Kernreaktoranlage nach Anspruch 1 oder 2, dadurch gekennzeichnet, daß das Stützglied (51) zusätzlich ein Abweisblech (55) umfaßt, das sich vom zweiten Umfang (59) hinweg erstreckt und zum Eingreifen mit der Umfangswand (23) des Reaktorgefäßes (1) vorgespannt ist.

4. Kernreaktoranlage nach einem der Ansprüche 1 bis 3, dadurch gekennzeichnet, daß mehrere Stützarme (67) sich vom zylinderförmigen Teil (35) der ringförmigen Ringdichtung (21) zum Reaktorgefäß (1) hin erstrecken und dies in der Weise, daß sie durch Aufliegen an dem Reaktorgefäß (1) eine Hilfsstütze für die ringförmige Ringdichtung (21) vorsehen, und daß jeder Stützarm (67) an dem ringförmigen Vorsprung (47) des Reaktorgefäßes (1) überlappend eingreift und mit Ausrichtemitteln (73) versehen ist.

5. Kernreaktoranlage nach einem der Ansprüche 1 bis 4, dadurch gekennzeichnet, daß die ringförmige Ringplatte (29) der ringförmigen Ringdichtung (21) mehrere Kreisbogenabschnitte (29) umfaßt, wobei jeder Kreisbogenabschnitt (29) ein paar Flansche (75) zum Verbinden desselben mit benachbarten Kreisbogenabschnitten (29) mittels Flanschverbindungsmitteln (77) aufweist.

6. Kernreaktoranlage nach einem der Ansprüche 1 bis 5, dadurch gekennzeichnet, daß zum Zulassen einer plastischen Deformation des ersten ringförmigen Teils (31) und zum Erleichtern seines Überlappens und abdichtenden Eingriffs mit einer Gegenplatte (63), die an einem Sims (17) der Behälterwand (11) vorgesehen ist, eine Ausnehmung (65) entlang der äußeren Umfangsfläche (37) des ersten ringförmigen Teils (31) der ringförmigen Ringplatte (29) in der Weise ausgebildet ist, daß deren Dicke im Bereich der Ausnehmung (65) geringer ist als die Dicke ihres übrigen Teils.

FIG. 1

**FIG.2**

**FIG. 3**